# EUROPÄISCHE PATENTSCHRIFT

(11) **EP 2 210 473 B1**
(45) Veröffentlichungstag und Bekanntmachung des Hinweises auf die Patenterteilung: **01.03.2017**
(21) Anmeldenummer: 09014872.7
(22) Anmeldetag: 01.12.2009
(51) Int. Cl.: A01D 57/20

(54) **Mähwerk mit Querfördereinrichtung**
Mower with transverse conveyer
Mécanisme de tonte doté d'un dispositif de transport transversal

(30) Priorität: 18.12.2008 DE 102008062712
(43) Veröffentlichungstag der Anmeldung: 28.07.2010
(73) Patentinhaber: CLAAS Saulgau GmbH, 88348 Bad Saulgau (DE)
(72) Erfinder: Epp, Siegfried, 88454 Hochdorf (DE)

(56) Entgegenhaltungen:
- EP-A1- 0 406 766
- EP-A1- 1 250 834
- EP-A1- 2 042 025
- GB-A- 2 088 684

## Beschreibung

Die Erfindung betrifft ein gezogenes Mähwerk mit einer Querfördereinrichtung gemäß dem Oberbegriff des unabhängigen Anspruchs 1.

### Stand der Technik

Bekannt sind gezogene Mähwerke mit Querfördereinrichtungen zum seitlichen Verlegen des abgemähten Erntegutes. Die Querfördereinrichtung ist dabei der Mäheinrichtung nachgeordnet, so dass das frisch gemähte Erntegut an die Querfördereinrichtung übergeben wird und quer zur Fahrtrichtung von dieser weiter gefördert wird und an der Abwurfstelle dann in einem Schwad auf dem Boden abgelegt wird. Die Querfördereinrichtung wird dabei nah über dem Boden in einer Eingriffstellung mit dem Förderstrom der Mahd gehalten.

Aus der GB 2 088 681 A ist ein derartiges Mähwerk bekannt. Die Querfördereinrichtung wird dabei von einem schwenkbaren Ausleger, der sich rückwärtig entgegen der Fahrtrichtung hinter der Mäheinheit erstreckt, von diesem aufgenommen und gehaltert. Zur Überführung in der Transportstellung wird die Querfördereinrichtung samt Ausleger um ein Schwenklager derart verschwenkt, dass sich die Querfördereinrichtung mit großem Abstand über dem Boden befindet. Dabei ist diese Transportstellung zugleich die außer Eingriffstellung der Querfördereinrichtung für den Fall, dass die Mahd nach dem Mähen nicht in einem Schwad abgelegt werden soll. Nachteilig dabei ist, dass die Transportstellung, die zugleich die außer Eingriffstellung darstellt, während der Transportfahrt Aus EP 1 250 834 B1 ist eine Mähmaschine, die an einen Traktor angehängt werden kann, bekannt mit einem Gestell, einer Mäheinrichtung, die von dem Gestell getragen wird, einer Gruppierungsvorrichtung, die es ermöglicht, die in zwei Durchgängen abgeschnittenen Pflanzen auf einem doppelten Schwad zu gruppieren oder einen einfachen Schwad zu bilden, wobei sich die Gruppierungsvorrichtung aus einem ersten Element zum Verschieben der Pflanzen zur hinteren Seite der Maschine und einem zweiten Element zum Verschieben der Pflanzen auf eine Seite der Maschine, zusammensetzt und wobei das zweite Verschiebeelement an einer Stütze mit im Wesentlichen horizontalen und zueinander ausgerichteten Gelenkachsen angelenkt ist, um die es verschwenkt werden kann, um dem ersten Verschiebeelement angenähert oder von diesem entfernt zu werden, und die Gelenkachsen des zweiten Verschiebeelements sich in der Nähe der Rückseite des zweiten Verschiebeelements erstrecken.

### Aufgabenstellung

Hier setzt die Aufgabe der Erfindung an mit dem Ziel, diesen Mangel zu beseitigen.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Das Mähwerk nach der Erfindung ist vorzugsweise mit einem starren Fahrwerk ausgebildet, d.h. der Fahrwerksrahmen selber, der über die Zugdeichsel mit dem Zugfahrzeug verbunden ist und der sich im hinteren Bereich mittels Stützräder am Boden abstützt, verfügt über keinen Mechanismus, der es ermöglicht, die Höhenlage der Stützräder relativ zum Fahrwerksrahmen zu verändern. Die Mäheinheit hingegen ist mittels eines Höhenverstellmechanismus relativ zum Fahrwerksrahmen veränderbar, damit die Mäheinheit einerseits auf den Boden abgesenkt und in Arbeitsstellung gebracht werden und andererseits in die Transportstellung angehoben werden kann. Mähwerke dieser Art sind häufig mit Aufbereitern ausgestattet, die das Mähgut bzw. die Mahd zwecks Beschleunigung des Anwelkprozesses knicken oder quetschen und dieser Aufbereiter dient gleichzeitig dann als Fördereinrichtung, um die Mahd anzuheben und damit zugleich auf eine Querfördereinrichtung weiter zu transportieren. Alternativ soll es aber auch möglich sein, die Mahd breitflächig ohne Schwadbildung in die Fläche hinter dem Mähwerk abzulegen. Dabei sieht die Erfindung vor, die Querfördereinrichtung mit einer ersten und zweiten Hubeinrichtung derart auszugestalten, die es ermöglicht, am Feldende die Querfördereinrichtung mit der zweiten Hubeinrichtung nur minimal anzuheben um die bereits am Boden liegende Mahd überqueren zu können, ohne dass diese von der Querfördereinrichtung erfasst und verschoben wird. Die Ausgestaltung der zweiten Hubeinrichtung weist aber zusätzlich den Vorteil auf, dass diese es auch ermöglicht, die Querfördereinrichtung in eine Straßentransportstellung zu überführen, welche diese mit genügendem Abstand über dem Boden anhebt ohne dabei Sichtbehinderungen auf rückwärtige Leuchten und Warntafeln hinnehmen zu müssen. Zusätzlich kann dabei die Querfördereinrichtung die Funktion eines Unterfahrschutzes übernehmen, welches einen Beitrag zur Erhöhung der Sicherheit im Straßenverkehr liefert. Zusätzlich ist es dabei von Vorteil, dass der Schwerpunkt des gesamten Mähwerks einen geringeren Abstand zum Boden aufweist, als dieses bei bekannten Mähwerken dieser Bauart bekannt ist. Auch dieses liefert einen Beitrag zur Erhöhung der Kippsicherheit im Straßenverkehr, welches sich insbesondere in Kurvenfahrten mit höherer Geschwindigkeit wegen der an das Mähwerk angreifenden Zentrifugalkräfte günstig auswirkt.

In einer weiteren vorteilhaften Ausgestaltung der Erfindung ist der zweite Stellantrieb des zweitenAushubmechanismus der Querfördereinrichtung direkt mit dem Stellantrieb des Aushubmechanismus der Mäheinheit gekoppelt. Dieses kann in besonders einfacher Form durch eine hydraulische Kopplung der beiden Stellantriebe der Aushubmechanismen von Mäheinheit und Querfördereinrichtung erfolgen, wobei der Gleichlauf dieser Kopplung beispielsweise durch hydraulische Mengenteiler erzwungen werden kann. Dieses bedeutet, dass der zweite Stellantrieb der Querfördereinrichtung zum Aushub der Querfördereinrichtung mit dem Stellantrieb des Aushubs der Mäheinheit hydraulisch gekoppelt ist und etwa synchron zur Aushubbewegung der Mäheinrichtung verläuft. Analog gilt dieses für die Absenkbewegungen. Der Fahrer des Mähwerks braucht somit nur ein Stellorgan für diese Aushub- bzw. Absenkvorgänge zu betätigen.

Im Einzelnen wird die konstruktive Ausgestaltung der Erfindung an dem nachfolgenden Ausführungsbeispiel näher erläutert:

### Ausführungsbeispiel

Es zeigen:

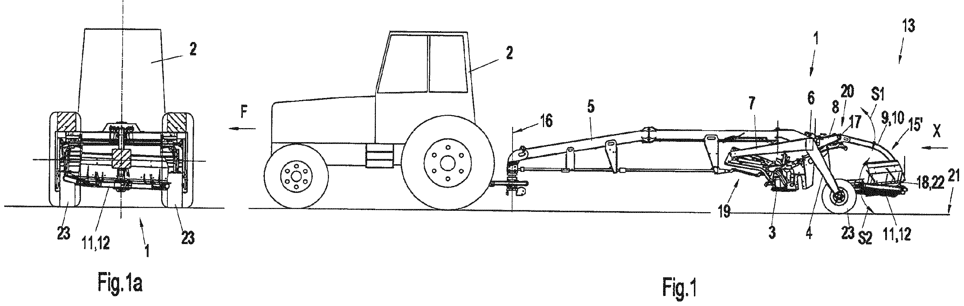

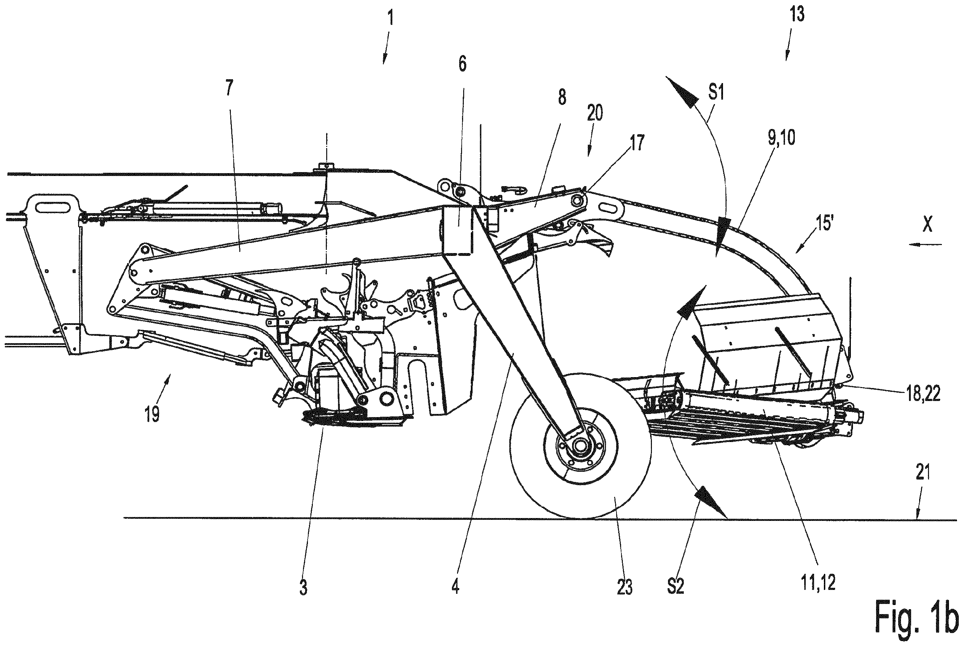

Fig. 1 zeigt ein erfindungsgemäßes Mähwerk 1 in einer Ansicht von der Seite in einer Transport- bzw. Vorgewendestellung 13 mit angehobener Mäheinheit 3 und einer Querfördereinrichtung 11 ebenfalls in Transport- bzw. Vorgewendestellung 13. Fig 1 a zeigt das Mähwerk gemäß Fig.1 in einer Ansicht X von hinten in Fahrtrichtung F gesehen und Fig.1b zeigt einen vergrößerten Ausschnitt aus Fig.1.

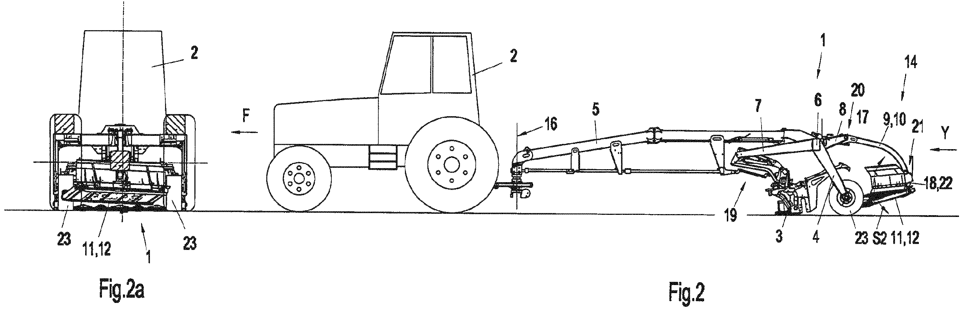

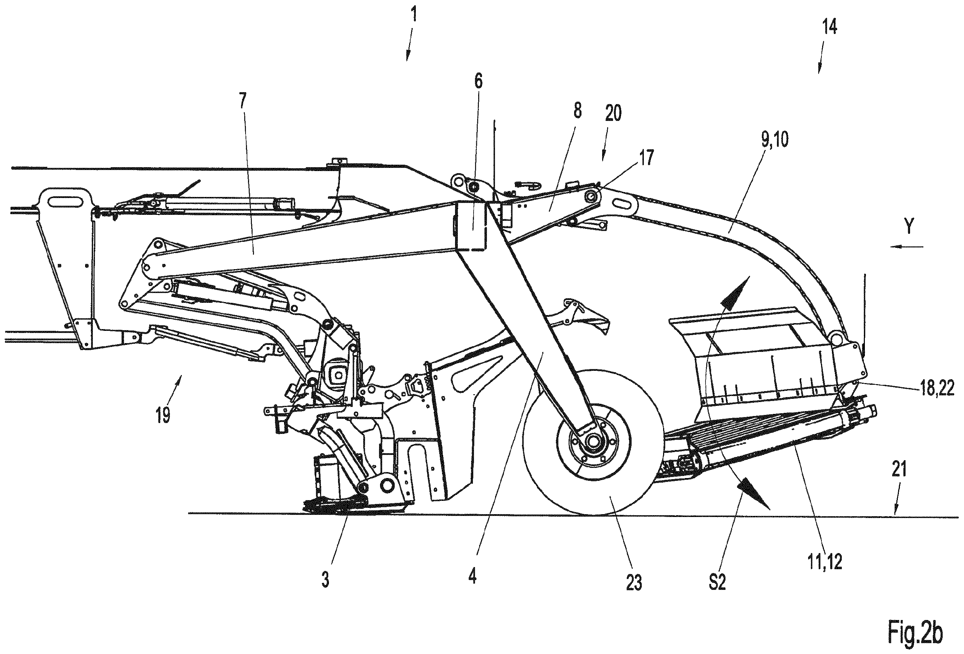

Fig. 2 zeigt ein erfindungsgemäßes Mähwerk 1 in einer Ansicht von der Seite in einer Arbeitsstellung mit Schwadablage 14 bzw. mit abgesenkter am Boden befindlichen Mäheinheit 3 und einer in Eingriffstellung befindlichen Querfördereinrichtung 11 ebenfalls in Arbeitsstellung mit Schwadablage 14. Fig 2a zeigt das Mähwerk gemäß Fig.2 in einer Ansicht von hinten in Fahrtrichtung F gesehen und Fig.2b zeigt einen vergrößerten Ausschnitt aus Fig.2.

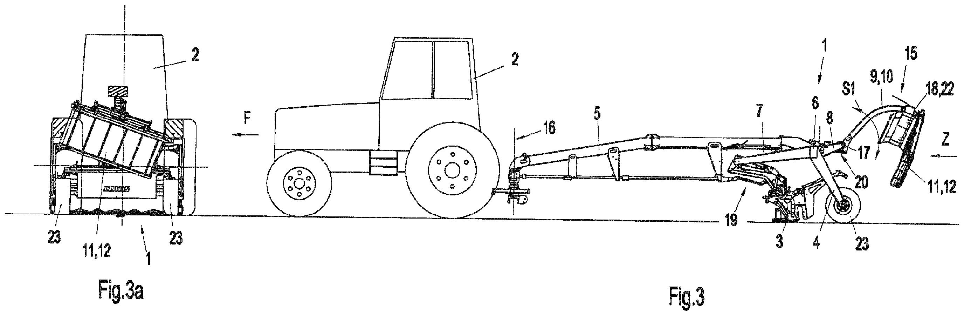

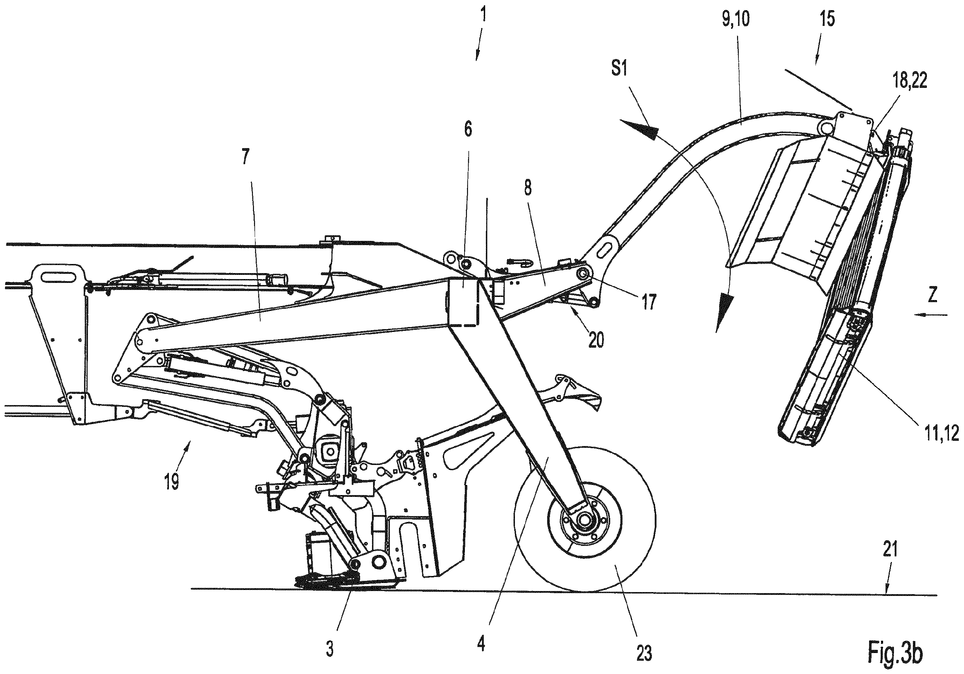

Fig. 3 zeigt ein erfindungsgemäßes Mähwerk 1 in einer Ansicht von der Seite in einer Arbeitsstellung ohne Schwadablage 15,15' bzw. mit abgesenkter am Boden befindlichen Mäheinheit 3 und einer in Nichteingriffstellung befindlichen Querfördereinrichtung 11 zugleich mit nach oben geschwenktem Ausleger10. Fig 3a zeigt das Mähwerk gemäß Fig.3 in einer Ansicht von hinten in Fahrtrichtung F gesehen und Fig.3b zeigt einen vergrößerten Ausschnitt aus Fig.3.

Fig.1 zeigt ein gezogenes bzw. aufgesatteltes Mähwerk 1 mit einem starren Fahrgestell 4 in der Transport- bzw. Vorgewendestellung 13, welches über ein Fahrwerk 4 mit Stützrädern 23 am Boden abgestützt wird und einer um eine Hochachse 16 verschwenkbaren Zugdeichsel 5 zur Ankoppelung an ein Zugfahrzeug 2. Das Fahrgestell 4 besteht im Wesentlichen aus einem Querträger 6, einem dem Querträger 6 vorgelagerten und starr mit diesem verschweißten Tragarm 7 und den dem Querträger 6 nachgelagerten und starr mit diesem verschweißten Tragarm 8.

Die Mäheinheit 3 ist an Tragarmen 7 und die Querfördereinrichtung 11 an den Tragarmen 8 des Fahrgestells 4 angelenkt. Die Querfördereinrichtung 11 ist an den Hebelarmen 9 eines Auslegers 10 in den Gelenkpunkten 17 schwenkbeweglich angelenkt.

Die Mäheinheit 3 ist in einem Gelenkpunkt durch einen Aushubmechanismus 19 in an sich bekannter Weise mit dem Fahrgestell 4 verbunden und relativ zu diesem zum Aufstand auf den Boden 21 in die Arbeitsstellung 14 absenkbar oder umgekehrt in die Vorgewende- bzw. Transportposition 13 anhebbar.

Die Querfördereinrichtung 11 bzw. das Förderband 12 ist an dem freien Ende der Hebelarme 9 des schwenkbeweglichen Auslegers 10 in einem Schwenklager 22 mit dem Gelenkpunkt 18 aufgenommen. Das Schwenklager 22 ist von einem nicht näher dargestellten Hydraulikzylinder überbrückt, so dass die Querfördereinrichtung 11 bzw. das Förderband 12 um den Gelenkpunkt 18 des Schwenklagers 22 im Sinne des Schwenkpfeils S2 rauf oder runter verschwenkt werden kann.

Die Querfördereinrichtung 11 ist an den Hebelarmen 9 eines Auslegers 10 in den Gelenkpunkten 17 schwenkbeweglich angelenkt.

Fig. 1 a zeigt das Mähwerk gemäß Fig. 1 in einer Ansicht X von hinten in Fahrtrichtung F gesehen.

Der Mäheinheit 3 nach geordnet ist eine Querfördereinrichtung 11 zum seitlichen Versetzen des abgemähten Ernteguts bzw. der Mahd, wobei die Querfördereinrichtung 11 an einem schwenkbeweglichen Ausleger 10 angelenkt ist. Die Querfördereinrichtung 11 ist vorteilhafterweise als leichtes Förderband 12 ausgebildet.

Der Ausleger 10 besteht aus zwei hintereinander liegenden schwenkbeweglichen Hebelarmen 9, die an ihren gebundenen Enden gelenkig mit dem Querträger 6 des Fahrgestells 4 verbunden sind, und er kann mittels eines ersten nicht näher dargestellten Aushubmechanismus 20 und dessen Stellantrieb in eine Eingriffs- oder Nichteingriffsstellung, bzw. eine Nichteingriffsstellung als Arbeitsstellung 15, ohne Schwadablage, oder in eine Eingriffstellung als Arbeitsstellung 15' in Bodennähe mit querversetzter Schwadablage verbracht werden.

Die erste Eingriffs- oder Nichteingriffsstellung 15,15' zeichnet sich durch einen besonders großen Hubweg aus, gekennzeichnet durch die Schwenkbewegung S1. Mit diesem ersten Stellantrieb kann die Querfördereinrichtung 11 sehr weit vom Boden 21 abgehoben werden, so dass die Querfördereinrichtung 11 völlig aus dem Bereich des nach hinten austretenden Gutstrom heraus geschwenkt werden kann. Diese nach oben hin geschwenkte Außereingriffstellung wird dann benutzt, wenn die Mahd breitflächig abgelegt werden soll. Ist hingegen eine Schwadablage vorgesehen, wird mit dem ersten Aushubmechanismus 20 bzw. dessen Stellantrieb, ausgebildet als Hydraulikzylinder, der Ausleger 10 nach unten in die untere Endlage verschwenkt bzw. abgesenkt wodurch die Querfördereinrichtung 11 in Eingriffstellung mit dem Gutstrom der nach hinten austretenden Mahd gebracht wird.

Der zweite Aushubmechanismus beinhaltet die Anlenkung und Verschwenkbarkeit, gekennzeichnet durch die Schwenkbewegung S2 der Querfördereinrichtung 11 am freien Ende des schwenkbeweglichen Auslegers 10 bzw. dessen Hebelarme 9 um den Gelenkpunkt 18 des Schwenklagers 22, so dass die Querfördereinrichtung 11 schwenkbeweglich in einem weiteren Schwenklager 22 aufgenommen wird, und dass die Schwenkbeweglichkeit um die Schwenkachse des weiteren Schwenklagers 22 es ermöglicht, dass die Querfördereinrichtung unabhängig von der ersten Eingriffs- oder Nichteingriffsstellung 15,15' in eine zweite Eingriffs- oder Nichteingriffsstellung, zum Einen als Transport- bzw. Vorgewendestellung 13 oder zum Anderen als Arbeitsstellung mit Schwadablage 14 verschwenkt werden kann.

Dazu ist es erforderlich, dass das weitere und untere Schwenklager von einen zweiten Stellantrieb vorteilhafter weise ein Hydraulikzylinder überbrückt wird. Dieser zweite Stellantrieb kann als einfachwirkender Hydraulikzylinder oder auch als doppeltwirkender Hydraulikzylinder ausgeführt bzw. ausgebildet sein, da die Querfördereinrichtung 11 auf Grund der Schwerkraft und der Lage des Schwenklagers 22 ein rücktreibendes Drehmoment um die Gelenkachse des Gelenkpunkts 18 des Schwenklagers 22 erzeugt.

Ein hydraulisches Sperrmittel zur Arretierung der Querfördereinrichtung 11 in der Eingriffs- oder Nichteingriffsstellung sorgt für einen sicheren Halt in der jeweiligen Endlage der Querfördereinrichtung 11. Dabei kann die Ansteuerung des ersten Stellantriebs des Aushubmechanismus 20 zur Betätigung der Aushub- bzw. Schwenkbewegung S1 und die Ansteuerung des zweiten Stellantriebs des Aushubmechanismus zur Betätigung der Aushub- bzw. Schwenkbewegung (S2) unabhängig voneinander erfolgen.

Prinzipiell ist es möglich, dass das Fahrwerk des Fahrgestells 4 als starres Fahrwerk oder auch als höhenveränderbares Fahrwerk ausgebildet ist.

### Bezugszeichenliste

- 1: Mähwerk
- 2: Zugfahrzeug
- 3: Mäheinheit
- 4: Fahrgestell
- 5: Zugdeichsel
- 6: Querträger
- 7: Tragarm
- 8: Tragarm
- 9: Hebelarmen
- 10: Ausleger
- 11: Querfördereinrichtung
- 12: Förderband
- 13: Transport- bzw. Vorgewendestellung
- 14: Arbeitsstellung mit Schwadablage
- 15,15': Arbeitsstellung ohne Schwadablage
- 16: Hochachse
- 17: Gelenkpunkt
- 18: Gelenkpunkt
- 19: Aushubmechanismus
- 20: Aushubmechanismus
- 21: Boden
- 22: Schwenklager
- 23: Stützräder

- F: Fahrtrichtung F
- S1: Schwenkbewegung
- S2: Schwenkbewegung

## Patentansprüche

1. Gezogenes oder aufgesatteltes Mähwerk (1) mit einem Fahrgestell (4), welches über ein Fahrwerk am Boden abgestützt ist, und einer um eine Hochachse (16) verschwenkbaren Zugdeichsel (5) zur Ankoppelung an ein Zugfahrzeug (2), und wenigstens einer Mäheinheit (3), welche an dem Fahrgestell (4) angelenkt ist und einer der wenigstens einen Mäheinheit (3) nach geordneten Querfördereinrichtung (11) zum seitlichen Versetzen von abgemähtem Erntegut, wobei die Querfördereinrichtung (11) in einem Schwenklager (22) schwenkbeweglich an einem Ausleger (10) angelenkt ist, **dadurch gekennzeichnet, dass** die Querfördereinrichtung (11) am freien Ende des Auslegers (10) im Schwenklager (22) aufgenommen wird und der Ausleger (10) an seinem gebundenen Ende in Gelenkpunkten (17) gelenkig mit einem Querträger (6) des Fahrgestells (4) verbunden ist und die Querfördereinrichtung (11) mittels eines ersten Stellantriebs (20) in eine erste Eingriffs- oder Nichteingriffsstellung verstellt werden kann.

2. Mähwerk nach Anspruch 1, **dadurch gekennzeichnet, dass** das weitere Schwenklager (22) von einen zweiten Stellantrieb überbrückt wird, welcher den Aushubmechanismus mit der Schwenkbewegung (S2) betätigen kann.

3. Mähwerk nach Anspruch 1 und 2, **dadurch gekennzeichnet, dass** der erste Stellantrieb des Aushubmechanismus (20) zu Betätigung der Aushub- bzw. Schwenkbewegung (S1) und der zweite Stellantrieb des Aushubmechanismus zu Betätigung der Aushub- bzw. Schwenkbewegung (S2) unabhängig voneinander betätigt werden können.

4. Mähwerk nach Anspruch 2, **dadurch gekennzeichnet, dass** der zweite Stellantrieb als einfachwirkender Hydraulikzylinder ausgeführt ist.

5. Mähwerk nach Anspruch 2, **dadurch gekennzeichnet, dass** der zweite Stellantrieb als doppeltwirkender Hydraulikzylinder ausgeführt ist.

6. Mähwerk nach Anspruch 1 und 2, **dadurch gekennzeichnet, dass** der zweite Stellantrieb Sperrmittel zur Arretierung der Querfördereinrichtung in der zweiten Eingriffs- oder Nichteingriffsstellung aufweist.

7. Mähwerk nach Anspruch 1 und 2, **dadurch gekennzeichnet, dass** der zweite Stellantrieb als Aushub der Querfördereinrichtung mit dem Stellantrieb des Aushubs der Mäheinheit hydraulisch gekoppelt ist.

8. Mähwerk nach Anspruch 7, **dadurch gekennzeichnet, dass** Steuermittel vorgesehen sind derart, dass die Bewegungsabläufe der Aushubbewegungen des Aushubmechanismus (19) der Mäheinheit (3) und der der Verschwenkbewegung (S2) der Querfördereinrichtung (11) etwa synchron zueinander verlaufen.

9. Mähwerk nach einem der Ansprüche 1 bis 8, **dadurch gekennzeichnet, dass** das Fahrwerk des Fahrgestells (4) als starres Fahrwerk ausgebildet ist.

10. Mähwerk nach einem der Ansprüche 1 bis 8, **dadurch gekennzeichnet, dass** das Fahrwerk des Fahrgestells (4) als höhenveränderbares Fahrwerk ausgebildet ist.

## Claims

1. A towed or semi-mounted mowing mechanism (1) comprising a chassis frame (4) supported on the ground by way of a running gear, and a tow bar (5) pivotable about a vertical axis (16) for coupling to a towing vehicle (2) and at least one mowing unit (3) pivotably mounted to the chassis frame (4) and a transverse conveyor device (11) arranged after the at least one mowing unit (3) for lateral displacement of mown crop material, wherein the transverse conveyor device (11) is pivotably moveably mounted to a boom (10) in a pivot mounting (22), **characterised in that** the transverse conveyor device (11) is received at the free end of the boom (10) in the pivot mounting (22) and at its connected end the boom (10) is connected at hinge points (17) hingedly to a transverse bearer (6) of the chassis frame (4) and the transverse conveyor device (11) can be moved into a first engagement or non-engagement position by means of a first adjusting drive (20).

2. A mowing mechanism according to claim 1 **characterised in that** the further pivot-mounting (22) is bridged over by a second adjusting drive which can actuate the lifting mechanism with the pivotal movement (S2).

3. A mowing mechanism according to claim 1 or claim 2 **characterised in that** the first adjusting drive of the lifting mechanism (20) for actuation of the lifting or pivotal movement (S1) and the second adjusting drive of the lifting mechanism for actuation of the lifting or pivotal movement (S2) can be actuated independently of each other.

4. A mowing mechanism according to claim 2 **characterised in that** the second adjusting drive is in the form of a single-acting hydraulic cylinder.

5. A mowing mechanism according to claim 2 **characterised in that** the second adjusting drive is in the form of a double-acting hydraulic cylinder.

6. A mowing mechanism according to claim 1 and claim 2 **characterised in that** the second adjusting drive has locking means for arresting the transverse conveyor device in the second engagement or non-engagement position.

7. A mowing mechanism according to claim 1 and claim 2 **characterised in that** the second adjusting drive is hydraulically coupled as a lifting means of the transverse conveyor device to the adjusting drive of the lifting means of the mowing unit.

8. A mowing mechanism according to claim 7 **characterised in that** there are provided control means such that the movement sequences of the lifting movements of the lifting mechanism (19) of the mowing unit (3) and that of the pivotal movement (S2) of the transverse conveyor device (11) occur approximately synchronously with each other.

9. A mowing mechanism according to one of claims 1 to 8 **characterised in that** the running gear of the chassis frame (4) is in the form of a rigid running gear.

10. A mowing mechanism according to one of claims 1 to 8 **characterised in that** the running gear of the chassis frame (4) is in the form of a variable-height running gear.

## Revendications

1. Faucheuse tractée ou semi-portée (1) comprenant un train de roulement (4), lequel est en appui sur le sol par l'intermédiaire d'un châssis, et un timon (5) pouvant pivoter autour d'un axe vertical (16) pour l'accouplement à un véhicule tracteur (2), et au moins une unité de fauchage (3), laquelle est articulée sur le train de roulement (4), et un dispositif de transport transversal (11) disposé après ladite au moins une unité de fauchage (3) pour le déplacement latéral du produit de récolte fauché, le dispositif de transport transversal (11) étant articulé de façon pivotante dans un palier de pivotement (22) sur un bras (10), **caractérisée en ce que** le dispositif de transport transversal (11) est reçu dans le palier de pivotement (22) à l'extrémité libre du bras (10) et le bras (10) est relié à son extrémité liée, à des points d'articulation (17), de façon articulée à une traverse (6) du train de roulement (4), et le dispositif de transport transversal (11) peut être amené, au moyen d'un premier actionneur (20), dans une première position de prise ou de non-prise.

2. Faucheuse selon la revendication 1, **caractérisée en ce que** l'autre palier de pivotement (22) est ponté par un deuxième actionneur, lequel peut actionner le mécanisme de levage avec le mouvement de pivotement (S2).

3. Faucheuse selon les revendications 1 et 2, **caractérisée en ce que** le premier actionneur du mécanisme de levage (20) servant à actionner le mouvement de levage ou de pivotement (S1) et le deuxième actionneur du mécanisme de levage (21) servant à actionner le mouvement de levage ou de pivotement (S2) peuvent être actionnés indépendamment l'un de l'autre.

4. Faucheuse selon la revendication 2, **caractérisée en ce que** le deuxième actionneur est conçu sous la forme d'un vérin hydraulique à simple effet.

5. Faucheuse selon la revendication 2, **caractérisée en ce que** le deuxième actionneur est réalisé sous la forme d'un vérin hydraulique à double effet.

6. Faucheuse selon les revendications 1 et 2, **caractérisée en ce que** le deuxième actionneur présente des moyens de blocage pour bloquer le dispositif de transport transversal dans la deuxième position de prise ou de non-prise.

7. Faucheuse selon les revendications 1 et 2, **caractérisée en ce que** le deuxième actionneur servant à lever le dispositif de transport transversal est couplé hydrauliquement à l'actionneur de levage de l'unité de fauchage.

8. Faucheuse selon la revendication 7, **caractérisée en ce que** des moyens de commande sont prévus de sorte que les séquences de mouvement des mouvements de levage du mécanisme de levage (19) de l'unité de fauchage (3) et du mouvement de pivotement (S2) du dispositif de transport transversal (11) se déroulent de façon à peu près synchrone.

9. Faucheuse selon l'une des revendications 1 à 8, **caractérisée en ce que** le châssis du train de roulement (4) est réalisé sous la forme d'un châssis rigide.

10. Faucheuse selon l'une des revendications 1 à 8, **caractérisée en ce que** le châssis du train de roulement (4) est réalisé sous la forme d'un châssis à hauteur variable.
